# NEUE EUROPÄISCHE PATENTSCHRIFT

(11) **EP 2 227 949 B2**
(45) Veröffentlichungstag und Bekanntmachung des Hinweises auf die Entscheidung über den Einspruch: **21.02.2018**
(45) Hinweis auf die Patenterteilung: 12.11.2014
(21) Anmeldenummer: 10156053.0
(22) Anmeldetag: 10.03.2010
(51) Int. Cl.: A01M 7/00

(54) **Verfahren zum Betrieb einer agraren Ausbringeinrichtung**
Method for operating an agricultural deployment device
Procédé de fonctionnement d'un dispositif d'extraction agraire

(30) Priorität: 13.03.2009 DE 102009001532
(43) Veröffentlichungstag der Anmeldung: 15.09.2010
(73) Patentinhaber: Schulte, Reinhold, 33106 Paderborn (DE)
(72) Erfinder: Schulte, Reinhold, 33106 Paderborn (DE)
(74) Vertreter: REHBERG HÜPPE + PARTNER

(56) Entgegenhaltungen:
- EP-A2- 0 864 369
- EP-A2- 1 961 300
- BE-A3- 1 014 341
- DE-T2- 69 625 914
- US-A- 5 134 961
- US-A- 5 475 614
- US-A- 5 704 546
- US-A1- 2006 265 106

## Beschreibung

### TECHNISCHES GEBIET DER ERFINDUNG

Die Erfindung betrifft ein Verfahren zum Betrieb einer agraren Ausbringeinrichtung für das Ausbringen von Fluiden, wie beispielsweise Pflanzenschutzmitteln, flüssigen Düngern und Ähnlichem, in der Landwirtschaft.

### STAND DER TECHNIK

Eine beispielhafte gattungsgemäße agrare Ausbringeinrichtung ist aus DE 10 2006 008 612 A1 bekannt, wo diese als "landwirtschaftliche Feldspritze" bezeichnet ist. Diese Feldspritze besitzt einen Kreislauf für das auszubringende Fluid, bei dem auch ohne eine Ausbringung das Fluid von einem Tank über eine Dosierarmatur, einen Durchflussmesser, eine Verzweigung zu mehreren Teilbreitenbereichen mit jeweils mehreren Spritzdüsen, Drossel- oder Abschaltventile der Teilbreitenbereiche, eine Zusammenführung der den Teilbreitenbereichen zugeordneten Teilleitungen und einen weiteren Durchflussmesser in einem Kreislauf wieder in den Tank zurückgeführt wird. Zweck dieses Kreislaufes ist es, Ablagerungen in der Feldspritze zu vermeiden, welche durch zu geringe Fließgeschwindigkeiten entstehen können. Das Ausbringen des Fluids über die Spritzdüsen kann einerseits über die Drossel- oder Abschaltventile beeinflusst werden, welche die fluidische Beaufschlagung der einzelnen Teilbreitenbereiche beeinflussen können, wobei über die Drossel- oder Abschaltventile nur eine gemeinsame Regelung sämtlicher Spritzdüsen eines Teilbreitenbereichs möglich ist. Andererseits sind den Spritzdüsen jeweils Abschaltventile oder Sperrventile zugeordnet, die von einer als Bordcomputer ausgebildeten Betätigungseinrichtung schaltbar sind, wobei eine einzelne Schaltung der Spritzdüsen oder eine gruppenweise Schaltung derselben möglich ist. Der als Bordcomputer ausgebildeten Betätigungseinrichtung werden auch die Signale der Durchflussmesser zugeführt, so dass durch Differenzbildung der ermittelten Durchflusswerte die tatsächliche Ausbringmenge des Fluids ermittelt werden kann. Weiterhin ist über den Bordcomputer eine elektrische Ansteuerung der Dosierarmatur und der Drossel- und Abschaltventile möglich.

DE 696 25 914 T2 offenbart eine landwirtschaftliche Sprühanlage, die eine unabhängige Steuerung der Sprühtropfengröße und der Zuführrate ermöglichen soll. Die Druckschrift beschreibt Probleme bei einem Sprühen infolge einer Drift der Sprühtropfen, die zu einer Übersprühung führen kann mit einer Vergeudung von Sprühmaterial und eine Gefährdung der Natur oder des Menschen, eine Beschädigung benachbarter Ernte, eine Gesundheitsgefährdung des Viehbestands und ähnliches hervorrufen kann. Eine Verschärfung dieser Probleme ergibt sich bei einer Vergrößerung der Sprühanlagen, Erweiterung des Sprühbereichs, Sprühfahrzeugen mit hohen Geschwindigkeiten, einer Gebläseversprühung oder einer Flugzeugbestäubung. Als bekannt dargestellt wird ein Sprühauslegersystem mit automatischer Steuerung der Höhe des Auslegers über dem Boden. Weiterhin beschrieben werden der Einfluss der Tropfengröße und des Spektrums der Tropfengrößen der versprühten Flüssigkeit auf die Wirksamkeit des gesprühten Mittels, dessen Eindringen in die Pflanzenanlagen sowie den Einfluss der Tropfengröße auf die Sprühmitteldrift. Weiterhin als bekannt beschrieben wird ein elektrisch betätigbares veränderbares Durchflusssteuersystem, in dem Magnetventile durch Rechteckimpulse betätigt werden, deren Frequenz und Arbeitszyklus oder Tastverhältnis für die Steuerung des Volumenflusses über die Sprühdüsen geändert werden kann. Hierbei soll die volumenmäßige Durchflussrate veränderbar sein, ohne dass sich die Tropfengröße und das Sprühmuster ändert, da ein Flüssigkeitszuführdruck konstant gehalten werden kann. Weiterhin als bekannt beschrieben wird die Ablage von Felddarstellungen mit digitalen Informationen über die verschiedenen Bodentypen in einem rechnergesteuerten Steuersystem, womit Sprühmittel, hier Dünger, entsprechend den optimalen Zuführungen für die verschiedenen, in einem Feld angetroffenen Bodenbedingungen bemessen und verteilt werden können. Eine Anpassung der Zuführrate der Sprühflüssigkeit kann automatisch für die Fahrzeuggeschwindigkeit eingestellt werden. Ebenfalls bekannt ist die Steuerung von Sprühvorgängen aus Global-Positioning-Systemen (GPS). Die Druckschrift beschreibt ein Sprühfahrzeug mit einem Tank und mehreren Auslegern. Die Ausleger verfügen über eine Flüssigkeitshauptleitung, in welcher über einen Druckregler ein Betriebsdruck eingestellt wird, wobei die Sprühflüssigkeit der Flüssigkeitshauptleitung über eine Pumpe aus dem Tank zugeführt wird und im Fall eines zu hohen Drucks in der Flüssigkeitshauptleitung durch eine Rückleitung in den Tank zurückgeführt werden kann. In der Flüssigkeitshauptleitung ist ein verstellbares Drosselventil vorgesehen. Die Durchflussrate und der Druck der Sprühflüssigkeit werden durch einen Durchflussmesser oder einen Druckgeber überwacht. Eine Abgabe der Sprühflüssigkeit erfolgt über an dem Ausleger abgestützte, über die Flüssigkeitshauptleitung versorgte Düsenanordnungen. Die Düsenanordnungen können zur individuellen Steuerung des Sprühmaterialdrucks mit mehreren Drosselventilen verbunden sein, wodurch jede Düsenanordnung die Sprühflüssigkeit mit einem bestimmten Spektrum der mittleren Tropfengrößen ausgeben kann. Über eine Zuführsteuereinheit in Form eines Mikroprozessor-Chips kann eine unabhängige Steuerung der Durchflussrate und der Tropfengröße erfolgen. Diese Steuereinheit kommuniziert mit den Magnetventilen der Düsenanordnungen über einen Düsen-Betätigungsbus, wobei auch möglich ist, dass die Düsenanordnungen interaktiv und vernetzt sind zum Austausch von Daten zwischen ihnen und der zentralen Zuführsteuereinheit. Ein Unterprogramm, welches auf der Steuereinheit abläuft, ermittelt die Betriebsparameter des Sprühsystems für die Durchflussrate und die bereits erkannt, dass das Tropfengrößenspektrum eines Durchflussdüsenkopfes abhängt von dem Zuführdruck der Sprühflüssigkeit und den Eigenschaften des Düsenkopfes. Für einen eingesetzten Typ eines in Serienfertigung hergestellten Magnetventils können Daten hinsichtlich der generalisierten Eigenschaften dieses Typs des Düsenkopfes vom Hersteller geliefert werden. Die mittlere Tropfengröße ist nichtlinear von dem Zuführdruck der Sprühflüssigkeit abhängig, wobei die mittlere Tropfengröße mit Abnahme des Druckes abnimmt. Gemäß der Druckschrift soll eine unabhängige Steuerung der Einstellpunkte der Durchflussrate und der Tropfengröße ermöglicht werden durch geeignete Änderungen in den Einstellpunkten der Arbeitszyklen und des Flüssigkeitsdrucks, wozu geeignete Tabellen oder funktionale Abhängigkeiten berücksichtigt werden, die in der Speichereinheit gespeichert sein können. Ebenfalls vorgeschlagen wird, das tatsächliche Sprühverhalten an einem Einstellpunkt mit einem gewünschten Sprühverhalten zu vergleichen und die Einstellpunkte für die Zuführrate der Sprühflüssigkeit und die Tropfengröße im Bedarfsfall anzupassen.

Weiterer Stand der Technik ist aus US 2006/265 106 A1, BE 1 014 341 A3, EP 0 864 369 A2, DE 6 98 17 421 T2 und DE 2 751 743 C2 bekannt.

### AUFGABE DER ERFINDUNG

Der vorliegenden Erfindung liegt die Aufgabe zugrunde, ein Verfahren zum Betrieb einer agraren Ausbringeinrichtung vorzuschlagen, welches, insbesondere unter Beachtung der Fertigungs- und Herstellungsanforderungen, hinsichtlich der Steuerungsmöglichkeiten und/oder -genauigkeit des Ausbringverhaltens verbessert ist.

### LÖSUNG

Die Aufgabe der Erfindung wird erfindungsgemäß mit den Merkmalen des Patentanspruchs 1 gelöst. Weitere Ausgestaltungen der erfindungsgemäßen Lösung ergeben sich entsprechend den abhängigen Ansprüchen 2 bis 17.

### BESCHREIBUNG DER ERFINDUNG

Unter einer "agraren Ausbringeinrichtung" im Sinne der vorliegenden Erfindung wird jedwede Einrichtung verstanden, über welche das Ausbringen von Fluiden wie Pflanzenschutzmitteln oder Dünger in der Landwirtschaft in Verbindung mit einem Fahrzeug wie einem Traktor oder Ähnlichem beeinflusst werden kann. Beispielsweise handelt es sich bei der agraren Ausbringeinrichtung um
- eine Ventileinrichtung,
- eine Ventileinrichtung mit ergänzender Spritzeinheit, Düseneinheit oder Sprüheinheit, möglicherweise ergänzt um eine Zuführeinheit zur Zuführung des Fluids zu mehreren Teileinheiten, über welche Teil-Fluidströme ausgebracht werden können oder
- eine gesamte Ausbringeinrichtung mit den erforderlichen Bauelementen von einem Behälter für das auszubringende Fluid bis zu der Sprüh-, Spritz- oder Düseneinheit, wobei ergänzende Betätigungseinheiten sowie Steuereinheiten integriert sein können oder nicht.

Erfindungsgemäß erfolgt bei der agraren Ausbringeinrichtung eine Steuerung des Ausbringens des Fluids über pulsmodulierte Ventile. Diese sind zwischen eine Quelle des Fluids und eine Ausbringöffnung zwischengeschaltet, so dass über die pulsmodulierten Ventile der Fluidstrom von der Quelle zu den Ausbringöffnungen beeinflusst werden kann.

Unter einer "Steuerung des Ausbringens des Fluids" wird hierbei jedwede Beeinflussung des Ausbringens des Fluids verstanden. Um lediglich einige Beispiele zu nennen, kann über das pulsmodulierte Ventil die Geschwindigkeit des Fluids beim Ausbringen, ein Volumenstrom beim Ausbringen, ein Druckverhältnis beim Ausbringen, ein Sprüh- oder Spritzwinkel beim Ausbringen oder eine Druckpulsation beim Ausbringen beeinflusst werden.

Unter einem "pulsmodulierten Ventil" im Sinne der Erfindung wird insbesondere ein Ventil verstanden, welches geeignet ausgebildet und ansteuerbar oder angesteuert ist, um eine Pulsweitenmodulation (auch Unterschwingungsverfahren, Pulsbreitenmodulation oder Pulsdauermodulation, abgekürzt als PWM, PBM, PDM) zu ermöglichen. Insbesondere handelt es sich bei dem pulsmodulierten Ventil um ein Elektromagnetventil, welches mit einer festen oder variablen Frequenz, also nach einer festen oder veränderbaren Schwingungsdauer T, in eine Öffnungsstellung angesteuert wird. Eine Rückführung in die Schließstellung erfolgt nach einer Zeitdauer t < T, wobei das Verhältnis t/T als "Tastverhältnis" bezeichnet wird. Für den Extremfall t = 0 ist das Ventil durchgängig für mehrere Perioden nT vollständig geschlossen, während für den anderen Extremfall t = T das Ventil durchgängig für mehrere Perioden nT geöffnet ist. Für 0 = t/T < 1 ist das Ventil intermittierend geöffnet, wobei eine Beeinflussung der Ausbringung des pulsmodulierten Ventils entsprechend dem durch die Steuerung vorgegebenen Tastverhältnis ist. Während theoretisch echte Pulse mit senkrechten Flanken, also unmittelbarem Übergang von der Öffnungsstellung zu der Schließstellung und umgekehrt bei der Pulsmodulation Einsatz finden, besitzen die in einem praktischen pulsmodulierten Ventil realisierbaren Öffnungs-Schließ-Signale eine endliche Flankensteilheit, wobei auch gezielt ein verzögertes Öffnen und Schließen mit beliebigen Signalverläufen und gezielter Nutzung von teilgeöffneten Zuständen möglich ist. Bei Ausbildung und Steuerung des Ventils für eine Pulsweitenmodulation findet ausschließlich eine Variation des Tastverhältnisses Einsatz. Ebenfalls im Rahmen der vorliegenden Erfindung einsetzbar ist bspw. eine Pulsfrequenzmodulation (PFM), bei der die Öffnungszeit t konstant gehalten wird, aber die Frequenz- und Periodendauer T variiert wird. Auch möglich ist ein kumulativer Einsatz einer Pulsfrequenzmodulation und einer Pulsweitenmodulation. Weiterhin möglich ist ein Einsatz einer Pulsamplitudenmodulation, für welche alternativ oder kumulativ beispielsweise die Größe eines Öffnungsquerschnittes oder Öffnungscharakteristika wie Düsenparametern modifiziert werden können.

Erfindungsgemäß wird zunächst eine Soll-Ausbringung des Fluids ermittelt oder vorgegeben. Aus der Soll-Ausbringung werden in einem weiteren Verfahrensschritt die Parameter für die Pulsmodulation berechnet.

Die Erfindung basiert auf der Erkenntnis, dass gemäß DE 696 25 914 T2 zwar für ein in Serienfertigung hergestelltes Magnetventil Daten bezüglich der Eigenschaften des Düsenkopfes von dem Hersteller verfügbar sein können. Diese Daten betreffen aber selektive Messergebnisse eines einzigen, aus einer größeren Gruppe von serienmäßig produzierten Düsenköpfen herausgegriffenen spezifischen Düsenkopfes, der als repräsentativ für sämtliche Serienprodukte angenommen wird, oder allenfalls die gemittelten Eigenschaften mehrerer geprüfter Düsenköpfe. Damit hängt letztendlich die Genauigkeit der Einhaltung des gewünschten Ausbringverhaltens eines nicht selber geprüften Ventils ab von der Fertigungsgenauigkeit des Ventils bzw. der fertigungsbedingten Abweichung dieses Ventils von dem tatsächlich geprüften Ventil. Soll das Ausbringverhalten innerhalb fest vorgegebener Grenzen vorgebbar sein, bedingt dies enge Toleranzen für die Fertigung des Ventils in einer Serienfertigung. Kommt es tatsächlich zu Abweichungen des Ausbringverhaltens von einem gewünschten Ausbringverhalten, kann diesem gemäß DE 696 25 914 T2 lediglich dadurch Rechnung getragen werden, dass im Betrieb das tatsächliche Ausbringverhalten mit dem gewünschten Ausbringverhalten verglichen wird und eine aufwändige Nachregelung der Einstellpunkte erfolgt.

Die Erfindung beschreitet hier einen neuen Weg: Für einen beispielhaft ausgewählten Satz von Parametern der Pulsmodulation hängt die Abweichung der tatsächlichen Ausbringung von Fluid aus dem pulsmodulierten Ventil, der Teil-Ausbringeinrichtung oder der Ausbringeinrichtung von einer Soll-Ausbringung ab von fertigungs- und bauteilbedingten Schwankungen: Beispielsweise kann für das pulsmodulierte Ventil für einen eingesetzten schwingenden Quarz als Taktgeber die Frequenz des Quarzes innerhalb eines Toleranzbereiches liegen. Entsprechendes gilt für Öffnungsgeometrien und/oder Stellwege des Ventils. Soll die Ausbringung innerhalb eines vorgegebenen Toleranzbereiches liegen, erfordert dieses gemäß dem Stand der Technik die Fertigung des pulsmodulierten Ventils und der Ausbringeinrichtungen mit entsprechend engen Toleranzen. Diese Kosten verursachende Erhöhung der Bauteil- und Fertigungsanforderungen kann u. U. drastisch reduziert werden, wenn vorgenannte Schwankungen auch in einem größeren Toleranzbereich hingenommen werden. Die Erfindung schlägt vor, dass dem pulsmodulierten Ventil eine Kalibriereinheit zugeordnet ist. Über die Kalibriereinheit kann werksseitig, turnusgemäß in einer Werkstatt oder im Betrieb eine Kalibrierung derart erfolgen, dass eine Abhängigkeit oder ein Kennfeld ermittelt wird, welches oder welche die Abhängigkeit der unterschiedlichen Ausbringungsgrößen von Parametern der Pulsmodulation und/oder Betriebs- oder Umgebungsparametern abbildet. Im Einsatz der Ausbringeinrichtung kann dann über die Betriebs- oder Umgebungsparameter, beispielsweise den wunschgemäßen auszubringenden Volumenstrom, unter Verwendung der Abhängigkeit oder des Kennfeldes auf die geeigneten Parameter für die Pulsmodulation geschlossen werden, die dann für jedes Ventil entsprechend den Fertigungsabweichungen dieses Ventils und der resultierenden unterschiedlichen Anhängigkeiten oder der Kennfelder zur Erzielung des Soll-Ausbringverhaltens unterschiedlich sein können. Somit können erfindungsgemäß die Toleranzanforderungen an die Ausbringeinrichtungen reduziert werden. Toleranzbedingte Abweichungen werden dann aber für jedes hergestellte Ventil individuell in einem Kennfeld oder einer Abhängigkeit berücksichtigt. Weiterhin kann die erzielbare Genauigkeit für die Ausbringung des Fluids auf einfache Weise erhöht werden, was zu einer Kostenreduktion, einer Erhöhung des agraren Ertrags und/oder einer Schonung der Umwelt führen kann.

Möglich ist, dass in dem erfindungsgemäßen Verfahren jedem Ventil eine Steuereinheit mit zugeordneter Speichereinrichtung für die Parameter, das Kennfeld oder die anderweitige Abhängigkeit zugeordnet ist. Eine derartige Steuereinheit und/oder Speichereinheit kann in das Ventil integriert sein, an dieses angeflanscht sein oder lediglich über eine elektrische Leitungsverbindungen mit diesem verbunden sein. Ebenfalls möglich ist, dass mittels einer Steuereinheit sowie Speichereinheit mehrere Ventile angesteuert werden, wobei die Steuereinheit dann jeweils für das anzusteuernde Ventil die Abhängigkeit oder das Kennfeld für jedes Ventil aus der Speichereinheit entnimmt. Ebenfalls möglich ist, dass je nach Ergebnis der Kalibrierung das Ventil einer Klasse zugeordnet wird und dann für die Ventile einer Klasse dieselbe Abhängigkeit oder dasselbe Kennfeld herangezogen wird.

Für die Durchführung der Kalibrierung gibt es vielfältige Möglichkeiten. Um hier lediglich ein Beispiel zu nennen, kann die Anpassung durch den Benutzer im Betrieb erfolgen. Hierzu kann für die Steuereinrichtung und das Ventil ein Prüfmodus aktiviert werden. Für diesen Prüfmodus erfolgt der Betrieb des Ventils mit vorgegebenen Parametern für die Pulsmodulation. Ein derartiger Betrieb erfolgt automatisiert für eine vorgegebene Zeitspanne. Dieser Prüfbetrieb führt in der Zeitspanne für jedes Ventil zu einem beispielsweise von den Fertigungsabweichungen des Ventils abhängigen unterschiedlichen Ausbringvolumen. Wird das ausgebrachte Fluid in dem Prüfmodus von einem Behälter aufgefangen und das Volumen mit Beendigung des Prüf- oder Testbetriebs oder Kalibrierbetriebs bestimmt, gibt dieses Volumen Aufschluss auf das individuelle Verhalten dieses Ventils. Beispielsweise kann dann das im Kalibrierbetrieb ermittelte Volumen in die Steuereinrichtung eingegeben werden, wo das individuell ermittelte Volumen für das Ventil bzw. die Abweichung von einem Sollvolumen ausgewertet wird und zu einer Anpassung der Abhängigkeit oder eines Kennfeldes für die geeigneten Parameter für die Pulsmodulation genutzt wird. Die Betriebsparameter der Pulsmodulation, beispielsweise das Tastverhältnis, können in der vorgegeben Zeitspanne in dem Prüfbetrieb konstant vorgegeben werden. Ebenfalls möglich ist, dass in mehreren Schritten das Tastverhältnis variiert wird mit der jeweiligen Erfassung des ausgebrachten Volumens des Fluids. Beliebige zeitliche Variationen des Tastverhältnisses sind ebenfalls möglich, womit dann mit Ermittlung des ausgebrachten Volumens eine Art "integraler Wert" für die Abhängigkeit oder das Kennfeld ermittelt werden kann.

Ausgangsseitig des pulsmodulierten Ventils kann je nach Auslegung der fluidischen Komponenten, der dynamischen Eigenschaften des Fluids und der Frequenz des pulsmodulierten Signals zur Ansteuerung des Ventils ein pulsierendes Ausbringen des Fluids erfolgen. Ebenfalls möglich ist, dass das stromabwärtige Strömungssystem eine Art Tiefpassfilter bildet, so dass die Pulsationen des Ausbringens des Fluids zumindest abgemildert werden, so dass beispielsweise Folge einer Variation des Tastverhältnisses bei einer Pulsweitenmodulation vorrangig eine Veränderung des Volumenstroms des Fluids ist.

Gemäß einem weiteren Vorschlag besitzt die agrare Ausbringeinrichtung, insbesondere eine Ventileinheit mit dem pulsmodulierten Ventil, eine elektrische Schnittstelle. Diese elektrische Schnittstelle ist alternativ oder kumulativ geeignet ausgebildet für die Bereitstellung folgender elektrischer Signale:
a) Zunächst kann über eine derartige elektrische Schnittstelle eine elektrische Leistungsversorgung erfolgen. Über einen Stecker oder Ähnliches kann die Zufuhr elektrischer Energie von einer elektrischen Energiequelle zu der agraren Ausbringeinrichtung erfolgen, womit beispielsweise ein Elektromagnet des pulsmodulierten Ventils geeignet angesteuert wird und/oder eine Steuereinheit der Ausbringeinrichtung, beispielsweise zur Ansteuerung des pulsmodulierten Ventils, versorgt wird.
b) Weiterhin kann über die elektrische Schnittstelle eine Zuführung von Parametern für die Pulsmodulation zu der Ausbringeinrichtung erfolgen. Bei diesen Parametern handelt es sich beispielsweise um eine Frequenz- oder Schwingungsdauer T der Pulse, eine Öffnungszeit t oder ein Tastverhältnis, eine Pulsamplitude, einen Pulsverlauf und Ähnliches, entsprechend welchen eine Ansteuerung des pulsmodulierten Ventils erfolgen soll.
c) Insbesondere für den Fall, dass in der Ausbringeinrichtung die vorgenannten Parameter für die Pulsmodulation erst ermittelt werden sollen, kann über die elektrische Schnittstelle eine Zuführung von Betriebs- oder Umgebungsparametern der agraren Ausbringeinrichtung oder des mit der agraren Ausbringeinrichtung gekoppelten Fahrzeugs erfolgen. Ohne Einschränkung auf diese sollen im Folgenden einige exemplarische Beispiele für derartige Betriebs- oder Umgebungsparameter genannt werden:
   - Beispielsweise kann über die Schnittstelle eine Position, Fahrgeschwindigkeit und/oder Beschleunigung eines mit der Ausbringeinrichtung gekoppelten Agrarfahrzeugs übermittelt werden, wobei auch möglich ist, dass über eine Steuereinheit der Ausbringeinrichtung durch digitale Integration und Differentiation eine der vorgenannten Größen in eine andere Größe umgerechnet wird. Beispielsweise kann eine derartige Größe durch ein GPS-Signal, einen Pedalwert des Agrarfahrzeugs, eine Drehzahl, eine Drehzahländerung eines Antriebsaggregates oder eines Fahrzeugrads, einen Drehwinkelgeber des Antriebssystems des Agrarfahrzeugs oder Ähnliches bereitgestellt werden. Über eine Position kann beispielsweise aus Erfahrungswerten oder geodätischen Informationen darauf geschlossen werden, wann die Ausbringung von mehr oder weniger Fluid erforderlich ist, so dass aus der Position Rückschlüsse über die Parameter für die Pulsmodulation gezogen werden können. Andererseits kann mit einer Erhöhung der Fahrgeschwindigkeit ein vergrößerter Volumenstrom bei der Ausbringung des Fluids gewünscht sein, was durch eine Modifikation der Parameter für die Pulsmodulation berücksichtigt werden kann.
   - Weiterhin kann über die Schnittstelle ein auszubringender Volumenstrom an eine Steuereinheit der Ausbringeinrichtung übergeben werden, wobei der auszubringende Volumenstrom beispielsweise von einer Bedienperson oder dem Fahrer des Agrarfahrzeugs vorgegeben werden kann oder über eine außerhalb der Ausbringeinrichtung angeordnete Steuereinheit automatisch aus anderen Betriebs- oder Umgebungsparametern bestimmt werden kann.
   - Weiterhin kann über die elektrische Schnittstelle eine gewünschte Tröpfchengröße beim Ausbringen des Fluids, beispielsweise für einen Sprühnebel, an eine Steuereinheit der Ausbringeinrichtung übergeben werden. Dieser Ausgestaltung liegt die Erkenntnis zugrunde, dass unter Veränderung der Parameter für die Pulsmodulation überraschenderweise nicht nur Einfluss auf die Ausbringung in Form einer Beeinflussung des Volumenstroms genommen werden kann, sondern auch entstehende Tröpfchen in dem pulsmodulierten Ventil nachgeschalteten Spritz-, Düsen- und Sprüheinheiten hinsichtlich Größe und Dichte beeinflusst werden können. Als Beeinflussungsparameter der Pulsmodulation für die Tröpfchengröße haben sich insbesondere das Tastverhältnis, eine Pulsamplitude oder Öffnungsamplitude, Pulsverläufe und/oder Steigungswinkel der Pulse herausgestellt. Der Nutzen der Beeinflussung des Tröpfchengröße soll anhand des folgenden Beispieles verdeutlicht werden:
      Ist grundsätzlich für eine gute Verteilung eines Pflanzenschutzmittels oder Unkrautvernichtungsmittels ein möglichst feiner Sprühnebel gewünscht, können die Parameter für die Pulsmodulation für die Gewährleistung des möglichst feinen Sprühnebels eingestellt werden. Ist allerdings der Einsatz der agraren Ausbringeinrichtung bei stärkerem Wind erforderlich, würde der feine Sprühnebel von dem Wind verlagert, so dass eine Benetzung von Agrarpflanzen und landwirtschaftlichem Boden abseits der Zielflächen erfolgen würde.
      In diesem Fall ist die Ausbringung vergrößerter Tröpfchen in einem Sprühnebel wünschenswert, die nicht so leicht durch den Wind abgetrieben werden. Die Ausbringung vergrößerter Tröpfchen kann durch eine Anpassung der Parameter für die Pulsmodulation angesteuert werden.
   - Weiterhin kann über die elektrische Schnittstelle ein Lenkwinkel des mit der Ausbringeinrichtung gekoppelten Agrarfahrzeugs übermittelt werden. Dieser Ausgestaltung liegt die Erkenntnis zugrunde, dass für ein Wenden des Agrarfahrzeugs unter Umständen eine verminderte oder keine Ausbringung des Fluids gewünscht ist. Je nach Lenkwinkel können somit die Parameter für die Pulsmodulation in Richtung einer vergrößerten oder verkleinerten Ausbringung des Fluids variiert werden. (Eine entsprechende Anpassung kann erfolgen auf Grundlage eines Positionssignales, welches Rückschlüsse auf etwaige Wendepunkte auf dem Feld ermöglicht.)
   - Entsprechend dem zuvor erläuterten Beispiel kann über die elektrische Schnittstelle auch ein erfasster Wert einer Windgeschwindigkeit übermittelt werden, der über eine Steuereinheit in geeignete Parameter für die Pulsmodulation umgerechnet wird.
   - Ebenfalls denkbar ist, dass über die Schnittstelle ein Fluidparameter wie beispielsweise eine Viskosität des auszubringenden Fluids übermittelt wird, der ebenfalls Einfluss auf die Ausbringung und sich ausbildende Tröpfchen und einen Sprühnebel haben kann.
   - Weiterhin kann der Ausbringeinrichtung als Betriebsparameter ein Druck des Fluids an der Quelle übermittelt wird, der für die geeignete Ermittlung der Parameter für die Pulsmodulation verwendet wird.

Während wie zuvor erwähnt die Betriebs- und Umgebungsparameter über die elektrische Schnittstelle übermittelt werden, ist es im Rahmen der vorliegenden Erfindung ebenfalls möglich, dass derartige Betriebs- oder Umgebungsparameter auch innerhalb der Ausbringeinrichtung selbst ermittelt werden. Die elektrische Schnittstelle kann in Form von standardisierten Steckern ausgebildet sein oder mittels eines multifunktionalen Steckers, über den beispielsweise sowohl eine elektrische Leistungsversorgung als auch eine Übermittlung von Betriebs- oder Umgebungsparametern erfolgt. Ebenfalls möglich ist, dass die elektrische Schnittstelle mit einem Anschluss für ein Bussystem ausgebildet ist, wobei es sich um ein CAN handeln kann oder um ein beliebiges anderes Bussystem wie beispielsweise ein Link-Bussystem.

Durchaus möglich ist, dass die Steuereinheit zur Ermittlung der Parameter für die Pulsmodulation außerhalb der Ausbringeinrichtung angeordnet ist. Gemäß einem weiteren Vorschlag ist allerdings die Steuereinheit, insbesondere eine CPU mit oder ohne Speichereinheit, Teil der Ausbringeinrichtung, so dass die Ausbringeinrichtung selber die Steuersignale für die Pulsmodulation, insbesondere die Pulsform, eine Pulsamplitude, ein Tastverhältnis und/oder eine Pulsfrequenz, ermitteln kann, zur Anpassung an ein Soll-Ausbringverhalten adaptieren kann oder zur Veränderung des Soll-Ausbringverhaltens anpassen kann.

In einer konkreten konstruktiven Ausgestaltung der Erfindung besitzt das eingesetzte pulsmodulierte Ventil einen schwingenden Quarz, der mit einer vorgegebenen Frequenz schwingt. Hierbei kann für einen besonderen Vorschlag der Erfindung die Frequenz der Schwingung des Quarzes mit einer Schwingungsdauer Tₗ ein Vielfaches der Pulsfrequenz mit der Schwingungsdauer T sein, so dass nTₗ = T gilt (mit n als ganze Zahl). Für eine Pulsfrequenzmodulation kann dann eine feste Pulsfrequenz oder können unterschiedliche Pulsfrequenzen mit Schwingungsdauern T = n₁Tₗ, T = n₂Tₗ, T = n₃Tₗ, ... Einsatz finden.

Für den Fall, dass die agrare Ausbringeinrichtung Fluid über eine größere Breite oder Fläche ausbringen soll, schlägt die Erfindung vor, mehrere baugleiche Teil-Ausbringeinrichtungen einzusetzen, die jeweils entsprechend den zuvor erläuterten Kriterien ausgestaltet sind, insbesondere jeweils über ein pulsmoduliertes Ventil verfügen. Beispielsweise können die Teil-Ausbringeinrichtungen äquidistant über einen quer zur Fahrrichtung des Agrarfahrzeugs orientierten Sprühbalken verteilt sein. Ebenfalls möglich ist, dass mehrere derartige Sprühbalken in Fahrtrichtung hintereinander liegend angeordnet sind zur Ausbringung gleicher oder unterschiedlicher Fluide durch die jeweiligen Sprühbalken.

Weiterhin schlägt die Erfindung vor, dass die Teileinheiten selektiv betreibbar sind. Hierdurch kann beispielsweise das Ausbringen beliebig entlang des zuvor erwähnten Sprühbalkens gestaltet werden durch unterschiedliche Parameter für die Pulsmodulation der einzelnen pulsmodulierten Ventile. Ebenfalls möglich ist es, für mehrere Sprühbalken jeweils unterschiedliche Parameter der Pulsmodulation einzusetzen, beispielsweise um mittels der einzelnen Sprühbalken unterschiedliche Ausbringungen unterschiedlicher Fluide zu bewirken. Ebenfalls möglich ist, dass eine Flächenausbringung vermindert wird, indem beispielsweise nur jede zweite Teil-Ausbringeinrichtung aktiviert wird. Beliebige anderweitige Verläufe der Ausbringung entlang eines Sprühbalkens sind ebenfalls möglich. Wird darüber hinaus erkannt, dass in Teilbreiten des Sprühbalkens keine Ausbringung erforderlich ist, beispielsweise da sich unter dieser Teilbreite eine Fahrrinne oder keine Pflanzen, befindet, können in dieser Teilbreite gezielt die Teil-Ausbringeinrichtungen deaktiviert werden. Ebenfalls denkbar ist, dass im Randbereich Parameter für die Pulsmodulation der Teil-Ausbringeinrichtung so vorgegeben werden, dass hier eine reduzierte Ausbringung erfolgt, da eine Überlappung mit einer Besprühung einer vorangegangenen benachbarten Bahn gegeben ist.

Durchaus denkbar ist, dass die Speisung der Ausbringeinrichtung, Teil-Ausbringeinrichtung oder des pulsmodulierten Ventils über eine Speiseleitung erfolgt, aus welcher sukzessive die Leitungsinhalte entnommen werden. Ein besonderer Vorschlag der Erfindung setzt einen Speicherbehälter ein, der die Quelle für das Fluid bildet und mehrere Teil-Ausbringeinrichtungen mit dem Fluid versorgt. Durch einen derartigen "zentralen" Speicherbehälter kann die fluidische Versorgung verbessert werden, wobei über eine einzige Regeleinrichtung die Druckverhältnisse in dem Speicherbehälter durch Nachführung von Fluid zentral geregelt werden kann. Weiterhin kann der Speicherbehälter eine Art Vorratspuffer darstellen für extreme Ausbringungssituationen, wobei infolge dieser Vorratseigenschaften des Speicherbehälters auch die Anforderungen an die Schnelligkeit der Regelung der Nachführung und die maximale Förderrate von Fluid in den Speicherbehälter reduziert werden können. Weiterhin kann der Speicherbehälter dafür Sorge tragen, dass sämtliche von dem Speicherbehälter versorgten Teil-Ausbringeinrichtungen mit dem gleichen Druck versorgt werden, was nicht zwingend der Fall ist für die Bereitstellung des Fluids allein über unterschiedlich lange Leitungsverbindungen. Möglich ist auch, dass mehrere Speicherbehälter eingesetzt sind. Beispielsweise ist jeweils ein Speicherbehälter für eine Teilbreite eines Sprühbalkens zuständig. Ebenfalls denkbar ist, dass jeweils ein Speicherbehälter oder mehrere Speicherbehälter für einen Sprühbalken bei mehreren hintereinander angeordneten Sprühbalken Einsatz finden.

Während durchaus denkbar ist, dass eine Zufuhr von Fluid lediglich über einen Eingangsanschluss erfolgt und eine Abfuhr des Fluids lediglich über die Teil-Ausbringeinrichtungen erfolgt, schlägt die Erfindung für eine weitere agrare Ausbringeinrichtung vor, dass eine Ableitung von Fluid aus dem Speicherbehälter zusätzlich zu der Ausbringung über die Teil-Ausbringeinrichtungen über einen zusätzlichen Ausgangsanschluss erfolgt. Diese Ausgestaltung ist insbesondere von Vorteil, wenn nach einem ersten Fluid ein abweichendes Fluid ausgebracht werden soll, ohne dass eine Vermischung der Fluide gegeben ist. Besitzt der Speicherbehälter keinen zusätzlichen Ausgangsanschluss, muss für den genannten Wechsel das erste Fluid vollständig über die Teil-Ausbringeinrichtungen ausgebracht werden, bevor das zweite Fluid eingesetzt werden kann. Über den erfindungsgemäßen zusätzlichen Ausgangsanschluss kann das erste Fluid für den Wechsel aus dem Speicherbehälter über den zusätzlichen Ausgangsanschluss abgeführt werden und anderweitig beseitigt werden.

Darüber hinaus schlägt die Erfindung vor, in der Ausbringeinrichtung eine Regeleinrichtung vorzusehen, über die der Druck in dem Speicherbehälter einstellbar ist. Hierbei kann eine Regelung auf einen konstanten Druck erfolgen, wobei dieser Druck durch die Regeleinrichtung unabhängig davon gewährleistet wird, über wie viele aktive Teil-Ausbringeinrichtungen ein Ausbringen von Fluid erfolgt oder wie hoch die Ausbringung der Teil-Ausbringeinrichtungen ist. Ebenfalls denkbar ist, dass die Regeleinrichtung einen variablen Druck in dem Speicherbehälter vorgeben kann, so dass über die Variation des Druckes in dem Speicherbehälter eine weitere Einflussgröße für die Ausbringung des Fluids gegeben ist.

Im weiterer Ausgestaltung der Erfindung erfolgt in einem erfindungsgemäßen Verfahren eine Erfassung eines Umgebungsmerkmals mittels eines Umgebungssensors. Um lediglich ein Beispiel zu nennen, kann es sich bei einem derartigen Umgebungssensor um eine Kamera, insbesondere eine CCD-Kamera handeln, mit welcher die Umgebung, an welcher sich das Fahrzeug zum Ausbringen des Fluids gerade vorbei bewegt, fotografiert oder gefilmt wird, wobei die Kamera vorzugsweise in Spülrichtung für das Fluid orientiert ist. Erkennt die Kamera, dass sich das Ventil gerade beispielsweise an einem zu besprühenden Baum oder einer Getreidereihe vorbeibewegt, kann die Soll-Ausbringung erhöht oder erst aktiviert werden, während beispielsweise beim Passieren einer Baumlücke die Soll-Ausbringung reduziert wird oder vollständig unterbunden wird. Erfindungsgemäß erfolgt somit eine Ermittlung oder Vorgabe einer Soll-Ausbringung unter Berücksichtigung des erfassten Umgebungsmerkmals. Auf diese Weise kann vermieden werden, dass Fluid unnötigerweise oder in zu großem Ausmaß ausgebracht wird in Bereichen, wo dieses in diesem Umfang nicht förderlich ist. Dies führt letztendlich zu einer Kostenersparnis für den Betreiber, eine erhöhte Reichweite des Fahrzeugs bei der agraren Ausbringung und nicht zuletzt zu einer Reduzierung der Umweltbelastung.

Die beispielhaft genannte Kamera kann eine Art Objekterkennung beinhalten, in welcher über Umrisse auf die Umgebung (Baum/nicht Baum) geschlossen wird. In einer besonderen Ausgestaltung der Erfindung wird ein Signal eines Umgebungssensors, insbesondere der Kamera, verarbeitet, indem ein Farbspektrum der Bildpunkte ermittelt wird. Aus diesem Farbspektrum kann dann auf ein Umgebungsmerkmal geschlossen werden mit hieraus resultierender Anpassung der Soll-Ausbringung. Für diesen erfindungsgemäßen Gedanken kann beispielsweise aus dem ermittelten Farbspektrum ein Grünanteil ermittelt werden. Ändert sich der Grünanteil zeitlich mit einem Anstieg dieses Anteils oder überschreitet der Grünanteil einen Schwellwert, kann darauf geschlossen werden, dass der Bildpunkt mit einer Grünfläche korreliert, also beispielsweise das Passieren eines Baumes indiziert, womit die Soll-Ausbringung erhöht werden kann. Ebenfalls möglich ist, dass in dem ermittelten Farbspektrum ein Gelbanteil ermittelt wird. Fährt beispielsweise die Ausbringeinrichtung bzw. das Ventil an einer Getreidefläche vorbei, kann über einen erhöhten Gelbanteil in dem Farbspektrum ermittelt werden, dass hier in der Vergangenheit zu wenig Dünger ausgebracht worden ist. Bei Unterschreiten eines Schwellwerts für diesen Gelbanteil kann somit eine Erhöhung der Soll-Ausbringrate automatisiert herbeigeführt werden.

Möglich ist, dass eine Kamera mit einer Erfassung von drei Farbkomponenten Einsatz findet. Möglich ist auch, dass eine Kamera mit einem Filter ausgestattet ist, welcher nur oder bevorzugt Licht durchlässt, welches dem Farbanteil, welches hier von Interesse ist, entspricht. Wird dann von der Kamera die Intensität des den Filter passierenden Lichts ermittelt, kann aus dem Absolutmaß der Intensität oder de zeitlichen Verlauf der Intensität das Umgebungsmerkmal abgeleitet werden. Möglich ist auch, dass neben dem an sich interessierenden Farbanteil weitere Farbanteile und deren Intensitäten ermittelt werden. Eine derartige Auswertung trägt der Tatsache Rechnung, dass beispielsweise zu unterschiedlichen Tageszeiten und/oder unterschiedliche Bewölkungszustände das Gesamt-Intensitätsniveau des Lichts variieren kann. Damit würde die Erfassung ein und desselben Umgebungsobjektes, also desselben Baumes, je nach Tageszeit, Bewölkungszustand und/oder Sonneneinstrahlung zu unterschiedlichen erfassten Intensitäten führen, was fälschlicherweise zu unterschiedlichen erfassten Umgebungsmerkmalen führen würde. Dieser Erkenntnis trägt die Erfindung dadurch Rechnung, dass unterschiedliche erfasste Intensitäten für unterschiedliche Farbanteile miteinander in Relation gesetzt werden, beispielsweise ein Basisniveau der Lichtintensität ins Verhältnis gesetzt wird mit einer Intensität in dem interessierenden Farbereich oder die Intensität in dem interessierenden Farbbereich in Relation gesetzt wird mit der Intensität in einem anderen, für die Lichtverhältnisse indikativen Farbanteil.

Weiterhin wird erfindungsgemäß vorgeschlagen, dass das Ventil mit einer Beleuchtungseinrichtung ausgestattet ist, welche vorzugsweise in Richtung der Ausbringung des Fluids orientiert ist. Die Beleuchtung kann hierbei für das erfindungsgemäße Verfahren entsprechend der Soll-Ausbringung automatisiert angesteuert werden. Diese automatisierte Ansteuerung kann eine On-Off-Ansteuerung sein, so dass für die Ausbringung des Fluids die Beleuchtung aktiviert wird, während diese deaktiviert wird, wenn keine Soll-Ausbringung durch das Ventil erfolgt. Ebenfalls möglich ist, dass die Intensität des Betriebs der Beleuchtung, also die Beleuchtungs-Lichtstärke, korreliert mit dem Soll-Ausbringvolumen. Auch denkbar ist, dass die Beleuchtung angepasst wird an weitere Parameter der Ausbringung, beispielsweise eine Tröpfchengröße und/oder einen Ausbringkegel. Weiterhin denkbar ist, dass je nach den Parametern für die Soll-Ausbringung eine Farbe der Beleuchtung variiert wird.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt in schematischer Darstellung eine agrare Ausbringeinrichtung, die in einem erfindungsgemäßen Verfahren einsetzbar ist.
- **Fig. 2**: zeigt in schematischer Darstellung eine weitere agrare Ausbringeinrichtung, die in einem erfindungsgemäßen Verfahren einsetzbar ist.
- **Fig. 3**: zeigt in schematischer Darstellung die Förderung eines Fluids in einer agraren Ausbringeinrichtung mit mindestens einer Teil-Ausbringeinrichtung in Form eines pulsmodulierten Ventils mit elektrischer Ansteuerung durch eine Steuereinheit.
- **Fig. 4**: zeigt eine Teil-Ausbringeinrichtung in einem Längsschnitt.
- **Fig. 5**: zeigt ein pulsweitenmoduliertes Ansteuersignal, welches in einer agraren (Teil-) Ausbringeinrichtung Einsatz finden kann.

### FIGURENBESCHREIBUNG

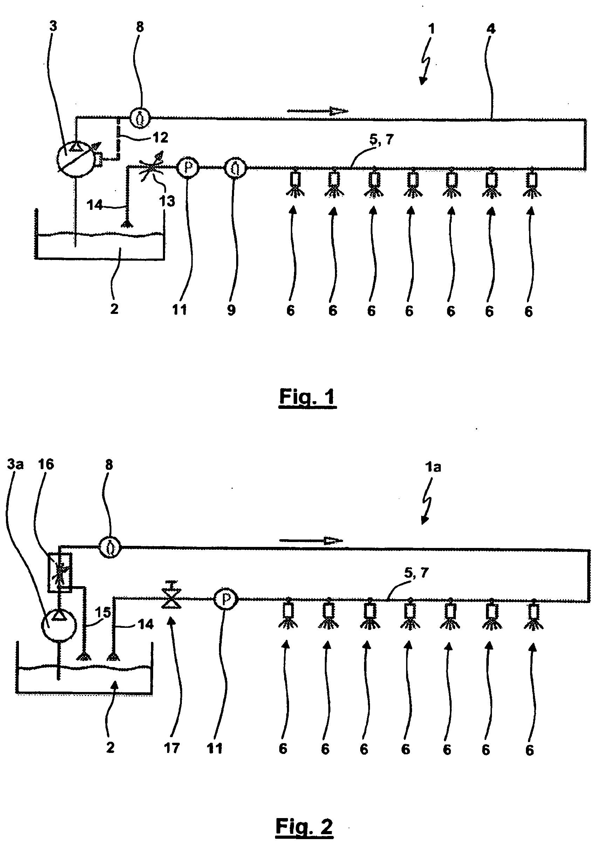

**Fig. 1** zeigt eine agrare Ausbringeinrichtung 1 für das Ausbringen von Fluiden wie Dünger in Verbindung mit einem landwirtschaftlichen Fahrzeug. Die agrare Ausbringeinrichtung beinhaltet einen Vorratsbehälter 2 für das Fluid, aus welchem das Fluid über eine Fördereinrichtung 3, insbesondere eine Pumpe, einem Leitungssystem 4 zugeführt wird. Bei dem Leitungssystem 4 kann es sich um eine einzige Leitung oder mehrere verzweigte Leitungen handeln. Das Leitungssystem 4 bildet eine Quelle 5 des Fluids für nachgeschaltete Teil-Ausbringeinrichtungen 6, über welche eine Ausbringung des Fluids in die Umgebung 20 erfolgt. Hierbei können mehrere Teil-Ausbringeinrichtungen 6 an einem Sprühbalken angeordnet sein. Die Quelle 5 kann hierbei mit einem als Bestandteil des Leitungssystems 4 ausgebildeten zentralen Druck- oder Speicherbehälter 7 ausgebildet sein, der beispielsweise einen gegenüber dem sonstigen Leitungssystem 4 vergrößerten Querschnitt besitzen kann. Stromabwärts und stromaufwärts der Teil-Ausbringeinrichtungen 6 sind Durchflussmesser 8, 9 angeordnet, durch deren Vergleich ein Volumenstrom der Ausbringung durch die Teil-Ausbringeinrichtungen 6 in einer Steuereinheit 10 ermittelt werden kann. Weiterhin ist insbesondere stromabwärts der Teil-Ausbringeinrichtungen 6 ein Drucksensor 11 angeordnet, dessen Ausgangssignal ebenfalls der Steuereinheit 10 zugeführt wird. In Abhängigkeit der Signale der Durchflussmesser 8, 9 sowie des Drucksensors 11 kann die Steuereinheit 10 elektrisch die Fördereinrichtung 3 ansteuern, um einen Druck sowie einen Volumenstrom zu steuern. Wie in Fig. 1 skizziert, kann ein pneumatisches Signal ausgangsseitig der Fördereinrichtung 3 über eine Steuerleitung 12 zur Regelung der Fördereinrichtung 3 zu dieser zurückgeführt sein.

Stromabwärts der Teil-Ausbringeinrichtungen 6, des Durchflussmessers 9 und des Drucksensors 11 ist eine vorzugsweise durch die Steuereinheit 10 elektrisch regelbare Drossel 13 angeordnet, über welche die Druck- und Durchflussverhältnisse im Bereich der Quelle 5 beeinflusst werden können. Die Drossel 13 passierendes Fluid wird über eine Rückführleitung 14 wieder dem Vorratsbehälter 2 zugeführt, so dass ein geschlossener Kreislauf mit ständiger Bewegung des Fluids in diesem gewährleistet sein kann.

In **Fig. 2** sind dem Ausführungsbeispiel gemäß Fig. 1 entsprechende Bauelemente mit gleichen Bezugszeichen versehen, während hinsichtlich ihrer Funktion entsprechende Bauelemente, die allerdings abweichend ausgebildet sind, mit gleichen Bezugszeichen unter Ergänzung des Buchstaben a gekennzeichnet sind. Fig. 2 zeigt eine alternative Ausgestaltung einer agraren Ausbringeinrichtung 1a, bei welcher die Fördereinrichtung 3a nicht über eine fluidische Steuerleitung 12 gesteuert wird. Die Fördereinrichtung 3a kann für diese Ausgestaltung eine konstante Förderleistung haben oder lediglich elektrisch durch eine Steuereinheit 10 gesteuert wird. Ausgangsseitig der Fördereinrichtung 3 ist eine Rückführleitung 15 vorgesehen, über welche ein Teilvolumenstrom des von der Fördereinrichtung 3 geförderten Fluids unmittelbar in den Vorratsbehälter 2 zurückgeführt wird. Eine Steuerung dieses Teilvolumenstromes sowie der Zufuhr von dem verbleibenden Teilvolumenstrom zu der Quelle 5 bzw. dem Speicherbehälter 7 sowie den Teil-Ausbringeinrichtungen 6 erfolgt über eine Regeleinheit 16, die ebenfalls über eine Steuereinheit 10 angesteuert werden kann. Vorzugsweise ist die Regeleinheit 16 als elektromagnetisches Schaltventil oder elektrisch regelbare Drossel ausgebildet. Stromabwärtig des Drucksensors 11 zur Erfassung des Drucks in der Quelle 5 bzw. dem Speicherbehälter 7 ist für das in Fig. 2 dargestellte Ausführungsbeispiel ein manuell oder elektrisch durch die Steuereinheit 10 betätigbares Sperrventil 17, vorzugsweise ein 2/2-Wegeventil mit einer Sperrstellung sowie einer Durchlassstellung, angeordnet. Das Sperrventil 17 kann aber auch mit zwischen den genannten Extrempositionen angeordneten Zwischenstellungen mit einer Durchlassstellung mit vermindertem Durchlassquerschnitt ausgebildet sein.

Für das in Fig. 1 dargestellte Ausführungsbeispiel teilt sich der von der Fördereinrichtung 3 geförderte Fluidstrom auf
- in einen Teilfluidstrom, welcher über die Teil-Ausbringeinrichtungen 6 ausgebracht wird, sowie
- einen Teilfluidstrom, welcher über die Rückführleitung 14 wieder dem Vorratsbehälter 2 zugeführt wird.

Für das Ausführungsbeispiel gemäß Fig. 2 kann für geschlossenes Sperrventil 17 über die Rückführleitung 14 ein überschießender Fluidstrom, welcher nicht über die Teil-Ausbringeinrichtungen 6 der Umgebung zugeführt werden kann, dem Vorratsbehälter 2 zugeführt werden, ohne dass zwingend dieser überschießende Fluidstrom vermieden werden muss durch geeignete Regelung der Fördereinrichtung 3a. Vorzugsweise erfolgt durch die Regeleinheit 16 und die Steuereinheit 10 eine Bestimmung der Förderleistung der Fördereinrichtung 3a und die Rückführung des Teilfluidstroms über die Rückführleitung 15 derart, dass in Quelle 5 bzw. Speicherbehälter 7 für die Teil-Ausbringeinrichtungen 6 ein Soll-Druck oder ein Soll-Druck in einem vorgegebenen Toleranzbereich gewährleistet wird. Hierbei kann der Soll-Druck konstant oder von anderen Parametern abhängig gestaltet sein.

Wird das Sperrventil 17 zumindest teilweise geöffnet, ist hinsichtlich der Rückführung eines Teilfluidstroms über die Rückführleitung 14 ein Betrieb ermöglicht, welcher im Wesentlichen dem Betrieb der Ausbringeinrichtung 1 gemäß Fig. 1 entspricht. Für derartige Betriebsweise kann vorzugsweise ein Wechsel eines über die Ausbringeinrichtung 1, 1a auszubringenden Fluids erfolgen, indem beispielsweise aus den Vorratsbehälter 2 bereits ein neues Fluid oder eine Spülflüssigkeit zugeführt wird, die dann die Quelle 5 bzw. den Speicherbehälter 7 durchspült, womit sämtliches "altes" Fluid über die Rückführleitung 14 dem Vorratsbehälter 2 oder einem Entsorgungsbehälter zugeführt wird. Hieran anschließend kann ein anderer Vorratsbehälter 2 für ein anderes Fluid genutzt werden oder in den Vorratsbehälter 2 ein anderes Fluid eingebracht werden. Dieses kann bei Sperrventil 17 in geschlossener Stellung gefördert werden und durch die Teil-Ausbringeinrichtungen 6 in die Umgebung ausgebracht werden. Allerdings würde ein derartiger Betrieb bedeuten, dass sich für den Beginn der Ausbringung das alte Fluzid oder eine Spülflüssigkeit mit dem neuen Fluid durchmischt, so dass die ausgebrachte Konzentration des Fluids anfänglich von einer gewünschten Konzentration abweicht. Soll dies vermieden werden, kann zunächst bei geschlossenen Teil-Ausbringeinrichtungen 6 das neue Fluid für eine gegebene Zeitspanne durch den Kreislauf gepumpt werden, bis die agrare Ausbringeinrichtung 1a vollständig mit dem neuen Fluid gefüllt ist. Ist dies der Fall, kann der zuvor beschriebene Betrieb mit geschlossenem Sperrventil 17 erfolgen. Ist ein Anlassen einer Spülflüssigkeit, eines alten Fluids oder eines gemischten Fluids gewünscht, kann über das Sperrventil 17 oder ein anschließendes Ablassventil auch eine Ableitung in einen separaten (nicht dargestellten) Entsorgungsbehälter erfolgen.

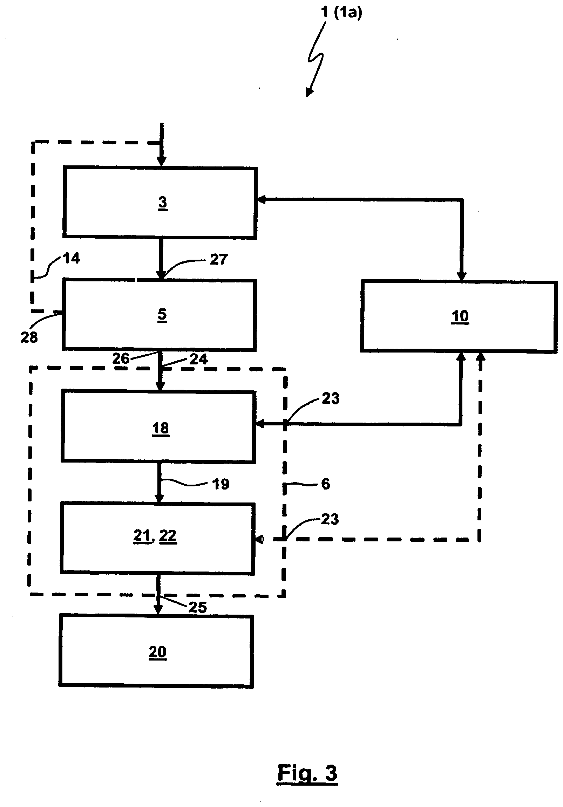

**Fig. 3** zeigt stark schematisiert eine agrare Ausbringeinrichtung 1, 1a mit dem fluidischen Strom von der Fördereinrichtung 3 zu einer Quelle 5, aus welcher die Teil-Ausbringeinrichtungen 6 gespeist werden. In Fig. 3 ist allerdings lediglich exemplarisch eine von mehreren aus der Quelle 5 gespeisten Teil-Ausbringeinrichtungen 6 gezeigt. Hierbei besitzt die Teil-Ausbringeinrichtung 6 ein pulsweitenmoduliertes Ventil 18, über welches die fluidische Durchflussrate an einem Ausgang 19, die Druckverhältnisse und der Zeitverlauf der vorgenannten Größen beeinflusst werden kann. Eine Abgabe des das Ventil 18 passierenden Fluids an die Umgebung 20 erfolgt unter Zwischenschaltung einer Verteileinrichtung 21, insbesondere einer Düse 22, über welche beispielsweise ein Sprühwinkel, eine Tröpfchengröße für das Ausbringen beeinflusst werden kann. Über die Steuereinheit 10 erfolgt wie dargestellt eine Ansteuerung der Fördereinrichtung 3 zur Beeinflussung der Förderleistung derselben sowie eine Ansteuerung oder Regelung des pulsweitenmodulierten Ventils 18. Ebenfalls möglich ist, dass über die Steuereinheit 10 eine Ansteuerung der Verteileinrichtung 21 oder Düse 22 zur Veränderung der Ausbringcharakteristik derselben erfolgt, was über das gestrichelt dargestellte Steuersignal in Fig. 3 angedeutet ist. Die Teil-Ausbringeinrichtung 6 ist hierzu mit einer geeigneten Schnittstelle 23 zur Zuführung von Steuersignalen von der Steuereinheit 10 versehen. Über eine derartige Schnittstelle 23 kann auch eine Verbindung mit einer elektrischen Leistungsversorgung gegeben sein. Ebenfalls ist eine Schnittstelle 24 vorgesehen zur Zuführung des Fluids von der Quelle 5. Ausgangsseitig der Teil-Ausbringeinrichtung 6 ist eine Ausbringöffnung 25 vorgesehen. Es versteht sich, dass eine Teil-Ausbringeinrichtung 6 separat von der Verteileinrichtung 21 bzw. Düse 22 ausgebildet sein kann. Die Quelle 5 besitzt neben einem Ausgangsanschluss 26, der mit der Schnittstelle 24 oder dem Eingang des Ventils 18 gekoppelt ist, einen Eingangsanschluss 27, der mit der Fördereinrichtung 3 fluidisch gekoppelt ist, sowie einen zusätzlichen Ausgangsanschluss 28, über welchen ein Teilfluidstrom über die Rückführleitung 14 zurückgeführt werden kann.

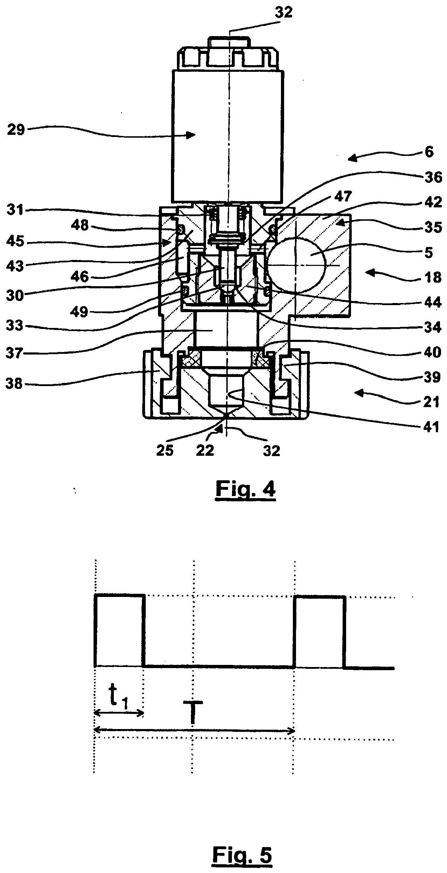

**Fig. 4** zeigt eine konstruktive Ausgestaltung einer Teil-Ausbringeinrichtung 6, welche mit einem pulsmodulierten Ventil 18 sowie einer Verteileinrichtung 21 gebildet ist. Das Ventil 18 ist in an sich bekannter Ausgestaltungsweise mit einem elektrisch von einer externen oder internen Steuereinheit 10 ansteuerbaren elektromagnetischen Aktuator 29 gebildet, über welchen ein Stößel 30 des Ventils 18 mit oder entgegen der Beaufschlagung durch eine Druckfeder 31 in Richtung einer Längsachse 32-32 translatorisch begrenzt verschieblich ist. In dem dem Aktuator 29 abgewandten Endbereich bildet der Stößel 30 ein Ventilelement 33 aus, welches für das dargestellte Ausführungsbeispiel beispielsweise eine teilkugelförmige Geometrie besitzt. In der in Fig. 4 wirksamen Schließstellung des Ventils 18, welche infolge der Anordnung und Wirkrichtung der Druckfeder 31 dem nichtbestromten Zustand des Aktuators 29 entspricht, kommt das Ventilelement 33 unter Abdichtung zur Anlage an einen Ventilsitz 34. Wird hingegen der Aktuator 29 bestromt, bewegt sich der Stößel 30 in Fig. 4 nach oben, so dass zwischen Ventilelement 33 und Ventilsitz 34 ein spaltartiger Übertrittsquerschnitt gebildet wird. Stromaufwärts des Ventilsitzes 34 ist in einem Gehäuse 35 des Ventils 18 eine Druckkammer 36 gebildet, welche fluidisch mit der Quelle 5 oder einer zu der Quelle 5 führenden Leitung verbunden ist. Stromabwärts des Ventilsitzes 34 ist eine Sammelkammer 37 gebildet, in die in der Öffnungsstellung des Ventils 18 Fluid von der Quelle 5 über den Übertrittsquerschnitt eintreten kann. Die Verteileinrichtung 21 ist für das dargestellte Ausführungsbeispiel mit einem separaten Gehäuse 38 gebildet, welche über einen Bajonettverschluss 39 oder eine Schnappverbindung mit dem Gehäuse 35 verbunden ist. Zwischen die Gehäuse 35, 38 ist ein axial und/oder radial vorgespanntes Dichtelement 40 zwischengeschaltet zwecks Abdichtung. Die Verteileinrichtung 21 ist mit einer Düse 22, die mit einer Bohrung mit einem geringen Durchmesser gebildet ist, ausgestattet, die über die dargestellte abgestufte Bohrung 41 mit der Sammelkammer 37 fluidisch verbunden ist.

Für das in Fig. 4 dargestellte Ausführungsbeispiel ist das Gehäuse 35 mit einem Mantelgehäuse 42 gebildet, über welches über geeignete Befestigungselemente eine Befestigung der Teil-Ausbringeinrichtung 6 an benachbarten Bauelementen, insbesondere einem Sprühbalken, erfolgen kann. Weiterhin erfolgt über das Mantelgehäuse 42 eine Kopplung der Teil-Ausbringeinrichtung 6 an die Quelle 5 bzw. Zuführleitungen. Darüber hinaus kann das Mantelgehäuse elektrische oder fluidische Schnittstellen besitzen. In das Mantelgehäuse 42 ist ein mit zwei Teileinsätzen 43, 44 gebildeter Einsatz 45 eingesetzt. Eine abgestufte Durchgangsbohrung des Teileinsatzes 43 bildet in einem ersten Axialabschnitt die Druckkammer 36, während in einen zweiten Axialabschnitt der Durchgangsbohrung der zweite Teileinsatz 44 eingeschraubt ist, welcher den Ventilsitz 34 ausbildet. Die mehrstückige Ausbildung des Gehäuses 35 mit dem Mantelgehäuse 42 und den Teileinsätzen 43, 44 ermöglicht einen bedarfsgerechten und kostengünstigen Austausch einzelner Bestandteile des Ventils 18. Kommt es beispielsweise zu Beschädigungen oder Ablagerungen im Bereich des Ventilsitzes 34, kann lediglich ein Austausch des Teileinsatzes 44 erfolgen, ohne dass ein Austausch des Mantelgehäuses 42 und/oder des Teileinsatzes 43 erfolgen muss. Ebenfalls möglich ist, dass derselbe Aktuator 29 mit verschiedenen Gehäusen 35, 38, 42, 43 bis 45, Ventilelementen 33, Ventilsitzen 34 und/oder Verteileinrichtungen 21 betrieben wird für unterschiedliche gewünschte Ausbringcharakteristika

Eine umlaufende Nut des Teileinsatzes 43 begrenzt gemeinsam mit der Innenbohrung des Mantelgehäuses 42 einen Zuführkanal 46, der fluidisch mit der Quelle 5 gekoppelt ist und über sich zwischen dem Zuführkanal 46 und der Druckkammer 36 erstreckende durchgehende Querbohrungen 47 mit der Druckkammer 46 verbunden ist. In axialer Richtung erfolgt beidseits eine Abdichtung des Zuführkanals 46 durch zwischen dem Teileinsatz 43 und dem Mantelgehäuse 42 wirkende Dichtelemente 48, 49.

**Fig. 5** zeigt ein beispielhaftes Signal für die Bestromung des Aktuators 29 des Ventils 18, hier für eine Pulsweitenmodulation, für welche eine Beeinflussung der Ausbringung des Fluids über das Verhältnis der Zeiten t₁/T erfolgt. Für die Zeitspannen t₁ erfolgt eine Bestromung des Aktuators 29, so dass das Ventil 18 in die Öffnungsstellung gesteuert wird. Für Zeitspannen der Schwingungsdauer T außerhalb von t₁ erfolgt keine Bestromung des Aktuators 29, so dass die Druckfeder 31 das Ventilelement 33 in die Schließstellung bringt mit abdichtendem Kontakt mit dem Ventilsitz 34.

Insbesondere das Mantelgehäuse 42 und/oder das Gehäuse 38 ist/sind aus Kunststoff gefertigt. Hingegen sind die Teileinsätze 43, 44 vorteilhafterweise aus Metall gefertigt, wobei insbesondere der Ventilsitz 34 gehärtet sein kann, so dass sich eine erhöhte Lebensdauer ergibt.

**BEZUGSZEICHENLISTE**

| | | | |
|---|---|---|---|
| 1 | agrare Ausbringeinrichtung | 31 | Druckfeder |
| 2 | Vorratsbehälter | 32 | Längsachse |
| 3 | Fördereinrichtung | 33 | Ventilelement |
| 4 | Leitungssystem | 34 | Ventilsitz |
| 5 | Quelle | 35 | Gehäuse |
| 6 | Teil-Ausbringeinrichtung | 36 | Druckkammer |
| 7 | Speicherbehälter | 37 | Sammelkammer |
| 8 | Durchflussmesser | 38 | Gehäuse |
| 9 | Durchflussmesser | 39 | Bajonett-Verschluss |
| 10 | Steuereinheit | 40 | Dichtelement |
| 11 | Drucksensor | 41 | Bohrung |
| 12 | Steuerleitung | 42 | Mantelgehäuse |
| 13 | Drossel | 43 | Teileinsatz |
| 14 | Rückführleitung | 44 | Teileinsatz |
| 15 | Rückführleitung | 45 | Einsatz |
| 16 | Regeleinheit | 46 | Zuführkanal |
| 17 | Sperrventil | 47 | Querbohrung |
| 18 | Ventil | 48 | Dichtelement |
| 19 | Ausgang | 49 | Dichtelement |
| 20 | Umgebung | | |
| 21 | Verteileinrichtung | | |
| 22 | Düse | | |
| 23 | Schnittstelle | | |
| 24 | Schnittstelle | | |
| 25 | Ausbringöffnung | | |
| 26 | Ausgangsanschluss | | |
| 27 | Eingangsanschluss | | |
| 28 | Ausgangsanschluss | | |
| 29 | Aktuator | | |
| 30 | Stößel | | |

## Patentansprüche

1. Verfahren zum Betrieb einer agraren Ausbringeinrichtung (1; 6) für das Ausbringen von Fluiden wie Pflanzenschutzmitteln oder Dünger in der Landwirtschaft, mit folgenden Verfahrensschritten:
a) Steuerung des Ausbringens des Fluids über pulsmodulierte Ventile (18), welche zwischen eine Quelle (5) des Fluids und eine Ausbringöffnung (25) zwischengeschaltet sind,
b) Ermittlung oder Vorgabe einer Soll-Ausbringung,
c) Ermittlung von Parametern der Pulsmodulation in Abhängigkeit von der Soll-Ausbringung,
**gekennzeichnet durch folgende Verfahrensschritte:**
d) werksseitig, turnusgemäß in einer Werkstatt oder im Betrieb wird eine Kalibrierung für jedes einzelne pulsmodulierte Ventil (18) über eine Kalibriereinheit derart durchgeführt, dass eine Abhängigkeit oder ein Kennfeld ermittelt wird, welches oder welche die Abhängigkeit der unterschiedlichen Ausbringungsgrößen von Parametern der Pulsmodulation und/oder Betriebsparametern abbildet,
e) Bestimmung geeigneter Parameter für die Pulsmodulation unter Berücksichtigung der Betriebsparameter, beispielsweise des wunschgemäßen auszubringenden Volumenstroms, und unter Verwendung der Abhängigkeit oder des Kennfeldes.

2. Verfahren nach Anspruch 1, **dadurch gekennzeichnet, dass** die Ermittlung der Parameter der Pulsmodulation in Abhängigkeit von Betriebs- oder Umgebungsparametern in Abhängigkeit von
- einer Position, Fahrgeschwindigkeit und/oder Beschleunigung eines mit der Ausbringeinrichtung gekoppelten Agrarfahrzeugs,
- einem auszubringenden Volumenstrom,
- einer gewünschten Tröpfchengröße für die Ausbringung des Fluids,
- einem Lenkwinkel,
- einem Fluidparameter,
- einer Windgeschwindigkeit und/oder
- einem Druck des Fluids an der Quelle,
erfolgt.

3. Verfahren nach Anspruch 1 oder 2, **dadurch gekennzeichnet, dass** mehrere baugleiche Teil-Ausbringeinrichtungen (6) zum Ausbringen eines Teilvolumenstroms des Fluids separat angesteuert werden.

4. Verfahren nach einem der Ansprüche 1 bis 3, **dadurch gekennzeichnet, dass** über eine elektrische Schnittstelle (23)
a) eine elektrische Leistungsversorgung erfolgt und/oder
b) Parameter für die Pulsmodulation übertragen werden und/oder
c) Betriebs- oder Umgebungsparameter übertragen werden, insbesondere eine Position, Fahrgeschwindigkeit und/oder Beschleunigung eines mit der Ausbringeinrichtung gekoppelten Agrarfahrzeugs, ein auszubringender Volumenstrom, eine gewünschte Tröpfchengröße für die Ausbringung des Fluids, ein Lenkwinkel, eine Windgeschwindigkeit, ein Fluidparameter und/oder ein Druck des Fluids an der Quelle.

5. Verfahren nach einem der Ansprüche 1 oder 2, **dadurch gekennzeichnet, dass** eine Steuereinheit (10) vorgesehen wird, mittels welcher Steuersignale für die Pulsmodulation, insbesondere eine Pulsform, eine Pulsamplitude, ein Tastverhältnis und/oder eine Pulsfrequenz, ermittelt werden oder erzeugt werden.

6. Verfahren nach einem der vorhergehenden Ansprüche, **dadurch gekennzeichnet, dass** das pulsmodulierte Ventil (18) mit einem mit einer Frequenz schwingenden Quartz ausgestattet wird, wobei die Frequenz der Schwingung des Quartzes ein Vielfaches der Pulsfrequenz beträgt.

7. Verfahren nach Anspruch 3, **dadurch gekennzeichnet, dass** die Teil-Ausbringeinrichtungen (6) selektiv betrieben werden.

8. Verfahren nach Anspruch 3 oder 7, **dadurch gekennzeichnet, dass** mehreren Teil-Ausbringeinrichtungen (6) ein gemeinsamer unter Druck stehender, die Quelle (5) für das Fluid bildender Speicherbehälter (7) vorgeordnet wird.

9. Verfahren nach Anspruch 8, **dadurch gekennzeichnet, dass** der Speicherbehälter (7) mit einem Eingangsanschluss (27) und einem Ausgangsanschluss (28) ausgestattet wird.

10. Verfahren nach Anspruch 8 oder 9, **dadurch gekennzeichnet, dass** der Druck in dem Speicherbehälter (7) über eine Regeleinrichtung geregelt wird.

11. Verfahren nach mindestens einem der vorhergehenden Ansprüche, **dadurch gekennzeichnet, dass** die Kalibriereinheit dem pulsmodulierten Ventil (18) zugeordnet ist.

12. Verfahren nach mindestens einem der vorhergehenden Ansprüche, **dadurch gekennzeichnet, dass** dem pulsmodulierten Ventil (18) eine Verteileinrichtung (21), insbesondere eine Düse (22), eine Spritzeinheit oder eine Sprüheinheit, nachgeordnet wird.

13. Verfahren nach einem der vorhergehenden Ansprüche,
**gekennzeichnet durch folgende Verfahrensschritte:**
a) Erfassen eines Umgebungsmerkmals mittels eines Umgebungssensors;
b) Ermittlung oder Vorgabe einer Soll-Ausbringung unter Berücksichtigung des erfassten Umgebungsmerkmals.

14. Verfahren nach Anspruch 13, **dadurch gekennzeichnet, dass** der Umgebungssensor eine Intensität einer Farbe oder eines Farbbereichs erfasst, aus welcher das Umgebungsmerkmal abgeleitet wird.

15. Verfahren nach Anspruch 14, **dadurch gekennzeichnet, dass** der Umgebungssensor Intensitäten von
a) einer Farbe oder eines Farbbereiches sowie
b) einer weiteren, anderen Farbe oder eines anderen Farbbereichs
erfasst, welche zur Ableitung des Umgebungsmerkmal verwendet werden, insbesondere miteinander in Beziehung gesetzt werden.

16. Verfahren nach Anspruch 14 oder 15, **dadurch gekennzeichnet, dass** der Umgebungssensor mit mindestens einem Filter ausgestattet ist, der ausschließlich oder bevorzugt eine Farbe, deren Farbintensität ausgewertet werden soll, durchlässt.

17. Verfahren nach einem der vorhergehenden Ansprüche, **dadurch gekennzeichnet, dass** das Ventil eine Beleuchtungseinrichtung besitzt, deren Betriebszustand automatisiert an die Soll-Ausbringrate angepasst wird.

## Claims

1. Method for operating an agricultural dispensing device (1; 6) for dispensing of fluids as pesticides or dung in agriculture with the following method steps:
a) control of the dispensing of fluid by pulse-modulated valves (18) which are interposed between a source (5) of the fluid and a dispensing opening (25),
b) determination or setting of a desired dispensing extend, dispensing rate or dispensing amount,
c) determination of parameters of the pulse-modulation dependent from the desired dispensing extend, dispensing rate or dispensing amount
**characterised by the following method steps:**
d) in the factory, cyclic in a garage or in workshop or during the operation a calibration is performed by a calibration unit for each single pulse-modulated valve (18) such that a dependency, a characteristic or a map is determined which represents the dependency of different dispensing factors from parameters of the pulse-modulation and/or from operating parameters,
e) determination of suitable parameters for the pulse-modulation under consideration of the operating parameters, e. g. the desired dispensed volumetric flow, and under use of the determined dependency, map or characteristic.

2. Method of claim 1, wherein the parameters of the pulse-modulation being dependent from operating parameters or surrounding parameters are determined dependent from
- a position, a drive velocity and/or an acceleration of an agricultural vehicle coupled with the dispensing device,
- a desired dispensed volumetric flow,
- a desired drop size for dispensing the fluid,
- a steering angle,
- a fluid parameter,
- a wind velocity and/or
- a pressure of the fluid at the source.

3. Method of claim 1 or 2, wherein a plurality of parts of dispensing devices (6) each constructed in the same way are separately controlled for dispensing a part of the volumetric flow of the fluid.

4. Method of one of claims 1 to 3, wherein via an electrical interface (23)
a) an electrical power supply is provided and/or
b) parameters for the pulse-modulation are transmitted and/or
c) operating or surrounding parameters are transmitted, in particular a position, a driving velocity and/or an acceleration of an agricultural vehicle coupled with the dispensing device, a dispensed volumetric flow, a desired drop size for dispensing the fluid, a steering angle, a wind velocity, a fluid parameter and/or a pressure of the fluid at the source.

5. Method of claim 1 and 2, wherein a control unit (10) is provided for determining or producing control signals for the pulse-modulation, in particular a pulse shape, a pulse amplitude, a duty cycle and/or a pulse frequency.

6. Method of one of claims 1 to 5, wherein the pulse-modulated valve (18) comprises a quartz element oscillating with a frequency, wherein the frequency of the oscillation of the quartz element is a multiple of the pulse frequency.

7. Method of claim 3, wherein the parts of the dispensing device (6) are operated selectively.

8. Method of claim 3 or 7, wherein a common pressurized storage reservoir (7) building the source (5) for the fluid is located upstream from the plurality of parts of the dispensing device (6).

9. Method of claim 8, wherein the storage reservoir (7) comprises an inlet port (27) and an outlet port (28).

10. Method of claim 8 or 9, wherein the pressure in the storage reservoir (7) is controlled by a control device (11).

11. Method of one of claims 1 to 10, wherein the calibration unit is associated with the pulse-modulated valve (18).

12. Method of one of claims 1 to 11, wherein a distributing device (21), in particular a blast pipe or nozzle (22), an ejecting unit or a spraying unit, is located downstream from the pulse-modulated valve (18).

13. Method of one of claims 1 to 12, **characterised by the following method steps:**
a) sensing a surrounding or environmental feature or parameter by a sensor,
b) determination or setting of a desired dispensing extend, dispensing rate or dispensing amount under consideration of the sensed feature or parameter.

14. Method of claim 13, wherein the sensor senses an intensity of a colour or a colour region which is determined from the feature or parameter.

15. Method of claim 14, wherein the sensor senses intensities of
a) a colour or a colour region as well as
b) another different colour or a different colour region,
wherein the sensed intensities are used for determining the feature or parameter, in particular by correlating the intensities with each other.

16. Method of claim 14 or 15, wherein the sensor is equipped with at least one filter, wherein the filter only provides passage of one colour or mainly provides passage of one colour wherein the colour intensity of the passed colour is evaluated or processed.

17. Method of one of claims 1 to 16, wherein the valve comprises a lighting unit wherein the operating state of the lighting unit is automatically adapted to the desired dispensing extend, dispensing rate or dispensing amount.

## Revendications

1. Procédé permettant le fonctionnement d'un dispositif de distribution (1 ; 6) agricole pour la distribution de fluides, tels que des produits phytosanitaires ou des engrais, dans le domaine agricole, comportant les étapes suivantes :
a) commande de la distribution du fluide par l'intermédiaire de vannes (18) à modulation par impulsions, qui sont montées entre une source (5) du fluide et une ouverture de distribution (25),
b) calcul ou définition d'une consigne de distribution,
c) calcul des paramètres de la modulation par impulsions en fonction de la consigne de distribution,
**caractérisé par** les étapes suivantes :
d) en usine, à intervalles réguliers dans un atelier, ou en cours de service, un calibrage pour chaque vanne (18) à modulation par impulsions est effectué au moyen d'une unité de calibrage de manière à déterminer une dépendance ou un diagramme caractéristique qui représente la dépendance entre les différentes grandeurs de distribution et les paramètres de la modulation par impulsions et/ou les paramètres de service,
e) détermination des paramètres appropriés à la modulation par impulsions en tenant compte des paramètres de service, tels que le flux volumique de distribution souhaité, et en utilisant la dépendance ou le diagramme caractéristique.

2. Procédé selon la revendication 1, **caractérisé en ce que** les paramètres de la modulation par impulsions en fonction des paramètres de service ou des paramètres d'environnement sont déterminés en fonction
- d'une position, d'une vitesse de déplacement et/ou d'une accélération d'un véhicule agricole couplé au dispositif de distribution,
- d'un flux volumique à distribuer,
- d'une taille de gouttelettes souhaitée pour la distribution du fluide,
- d'un angle de direction,
- d'un paramètre du fluide,
- d'une vitesse du vent et/ou
- d'une pression du fluide au niveau de la source.

3. Procédé selon la revendication 1 ou 2, **caractérisé en ce que** plusieurs dispositifs de distribution partiels (6) de structure identique sont commandés séparément pour distribuer un flux volumique partiel du fluide.

4. Procédé selon l'une quelconque des revendications 1 à 3, **caractérisé en ce que** par l'intermédiaire d'une interface électrique (23)
a) est assurée une alimentation électrique et/ou
b) sont transmis des paramètres pour la modulation par impulsions, et/ou
c) sont transmis des paramètres de service ou des paramètres d'environnement, en particulier une position, une vitesse de déplacement et/ou une accélération d'un véhicule agricole couplé au dispositif de distribution, un flux volumique à distribuer, une taille de gouttelettes souhaitée pour la distribution du fluide, un angle de direction, une vitesse du vent, un paramètre du fluide et/ou une pression du fluide au niveau de la source.

5. Procédé selon l'une des revendications 1 ou 2, **caractérisé en ce qu'**il est prévu une unité de commande (10) qui permet de déterminer ou de générer des signaux de commande pour la modulation par impulsions, en particulier une forme d'impulsion, une amplitude d'impulsion, un rapport cyclique et/ou une fréquence d'impulsion.

6. Procédé selon l'une quelconque des revendications précédentes, **caractérisé en ce que** la vanne (18) à modulation par impulsions est équipée d'un quartz oscillant avec une fréquence, la fréquence de l'oscillation du quartz étant égale à un multiple de la fréquence d'impulsion.

7. Procédé selon la revendication 3, **caractérisé en ce que** les dispositifs de distribution partiels (6) sont actionnés de manière sélective.

8. Procédé selon la revendication 3 ou 7, **caractérisé en ce qu'**un réservoir (7) sous pression, formant la source (5) pour le fluide est monté en amont des dispositifs de distribution partiels (6).

9. Procédé selon la revendication 8, **caractérisé en ce que** le réservoir (7) est équipé d'un raccord d'admission (27) et d'un raccord de sortie (28).

10. Procédé selon la revendication 8 ou 9, **caractérisé en ce que** la pression dans le réservoir (7) est réglée par un dispositif de réglage.

11. Procédé selon au moins l'une quelconque des revendications précédentes, **caractérisé en ce que** l'unité de calibrage est associée à la vanne (18) à modulation par impulsions.

12. Procédé selon au moins l'une quelconque des revendications précédentes, **caractérisé en ce qu'**un dispositif de répartition (21), en particulier une buse (22), une unité de projection ou une unité de pulvérisation, est monté en aval de la vanne (18) à modulation par impulsions.

13. Procédé **caractérisé par** les étapes suivantes :
a) détection d'une caractéristique d'environnement au moyen d'un capteur d'environnement ;
b) calcul ou définition d'une consigne de distribution en tenant compte de la caractéristique d'environnement.

14. Procédé selon la revendication 13, **caractérisé en ce que** le capteur d'environnement détecte l'intensité d'une couleur ou une zone de couleur, à partir de laquelle est dérivée la caractéristique d'environnement.

15. Procédé selon la revendication 14, **caractérisé en ce que** le capteur d'environnement détecte des intensités
a) d'une couleur ou d'une zone de couleur, ainsi que
b) d'une autre couleur supplémentaire ou d'une autre zone de couleur,
lesquelles sont utilisées pour en déduire la caractéristique d'environnement, en particulier sont mises en rapport les unes avec les autres.

16. Procédé selon la revendication 14 ou 15, **caractérisé en ce que** le capteur d'environnement est équipé d'au moins un filtre qui laisse passer exclusivement ou de préférence une couleur dont l'intensité doit être analysée.

17. Procédé selon l'une quelconque des revendications précédentes, **caractérisé en ce que** la vanne comporte un dispositif d'éclairage, dont l'état de service est ajusté automatiquement à la vitesse de consigne de la distribution.
